# EUROPÄISCHE PATENTSCHRIFT

(11) **EP 0 413 940 B1**
(45) Veröffentlichungstag und Bekanntmachung des Hinweises auf die Patenterteilung: **31.03.1993**
(21) Anmeldenummer: 90113212.6
(22) Anmeldetag: 11.07.1990
(51) Int. Cl.: C02F 11/00, B01D 29/35, B30B 9/12

(54) **Kontinuierlich und automatisch arbeitende Vorrichtung zum Entwässern eines Schlamms, insbesondere Klärschlamms**
Device for continuous and automatic draining sludge, especially sewage sludge
Dispositif de déshydration continue et automatique d'une boue, en particulier celle résultant de l'épuration des égouts

(30) Priorität: 22.08.1989 DE 3927642; 22.12.1989 DE 3942561
(43) Veröffentlichungstag der Anmeldung: 27.02.1991
(73) Patentinhaber: Huber, Hans Georg, D-92334 Berching (DE)
(72) Erfinder: Huber, Hans Georg, D-92334 Berching (DE)
(74) Vertreter: Rehberg, Elmar, Dipl.-Ing.

(56) Entgegenhaltungen:
- EP-A- 0 017 809
- CH-A- 654 787
- DE-A- 336 118
- GB-A- 2 119 670
- US-A- 3 938 434
- US-A- 4 361 081
- US-A- 4 741 836
- CGE Alsthom S.A.: Prospekt "Schlammentwässerung TASSTER U"

## Beschreibung

Die Erfindung bezieht sich auf eine kontinuierlich und automatisch arbeitende Vorrichtung zum Entwässern eines mit einem Flockungshilfsmittel versetzten Schlamms, ïnsbesondere Klärschlamms, mit den im Oberbegriff des Patentanspruchs 1 aufgeführten Merkmalen. Statt der Förderschnecke kann auch die Siebwandung umlaufend angetrieben sein und die Förderschnecke stillstehen. Insbesondere in der Abwassertechnik fallen Schlämme der verschiedensten Art an, beispielsweise Frischschlamm, Faulschlamm, Rückführschlamm, Überschußschlamm, Schwimmschlamm u. dgl., die einen sehr hohen Wassergehalt und einen dementsprechend niedrigen Feststoffgehalt aufweisen. Die automatisch arbeitende Vorrichtung dient dazu, den Feststoffgehalt eines durch ein Flockungsmittel eingedickten Schlamms zu erhöhen. Sie kann in der Abwassertechnik, aber auch in der Papierindustrie und in der Textilfabrikation eingesetzt werden.

Eine kontinuierlich und automatisch arbeitende Vorrichtung zum Entwässern eines Schlamms gemäß dem Oberbegriff des Patentanspruchs 1 ist aus der US-A 39 38 434 bekannt. Der Schlamm wird in einem Behälter konditioniert und durchläuft dann die horizontal ausgerichtete Schneckenfördereinrichtung. In der Schneckenfördereinrichtung erfolgt ein Druckaufbau durch die Durchmesserreduzierung der Siebwandung in dem konischen Bereich. Zur weiteren Steigerung des Druckaufbaus wird vorgeschlagen, die Wendel der Förderschnecke in dem konischen Bereich mit abnehmender Steigung vorzusehen. Weitere Möglichkeiten, einen Druckaufbau in der Schneckenfördereinrichtung zu erzielen, sind in der US-A 39 38 434 nicht beschrieben.

Eine bekannte kontinuierlich und automatisch arbeitende Vorrichtung zum Entwässern eines mit einem Flockungshilfsmittel versetzten Schlamms, ïnsbesondere Klärschlamms, mit einer Schneckenfördereinrichtung, die eine angetriebene Förderschnecke aus Welle und Wendel und eine Siebwandung aufweist, ist die Schlammentwässerungsanlage "TASSTER U" der Firma "CGE ALSTHOM". Der mit einem Flockungsmittel versetzte Schlamm wird in einen Behälter eingebracht, in welchem eine Rührwelle mit vertikaler Achse angeordnet ist. Der Behälter ist in seinem unteren Bereich konisch gestaltet und geht in eine Schneckenfördereinrichtung mit horizontaler Achse über, die eine zylindrische Siebwandung aufweist und eine Wendel besitzt, womit der Schlamm entwässert und verdichtet wird. Das Ende der Schneckenfördereinrichtung wird mit einer Klappe, die durch ein Gegengewicht belastet werden kann, mehr oder weniger zugehalten, um einen Druckaufbau im Innern der Schneckenfördereinrichtung herbeizuführen. Im Bereich der Siebwandung wird Filtratwasser abgezogen. Das Aufbringen von Druck in der Schneckenfördereinrichtung ist nur bedingt förderlich, um Wasser abzuscheiden. Da die Konsistenz des Feststoffanteils des Schlamms oft sehr fein ist, besteht die Gefahr, daß eine Druckerhöhung nur dazu führt, daß Feststoffpartikel über die Öffnungen der Siebwandung hindurchgedrückt werden, während die gewünschte Wasserabscheidung dann nicht mehr stattfindet. Auch ist es so, daß durch den Druckaufbau ein Zusammenpressen des Feststoffanteils im Bereich der Siebwandung erfolgt, während im Innern der Schneckenfördereinrichtung im Bereich der Welle der Schlamm weiterhin relativ feucht bleibt, da das Wasser an dieser Stelle nach außen durch den verdichteten Feststoff nicht hindurchdringen kann.

Eine andere bekannte Vorrichtung zum Entwässern von Klärschlamm sieht eine Siebzone mit einer nachgeschalteten Preßzone vor, wobei sich durch diese beiden Zonen eine gemeinsam angetriebene Förderschnecke aus Welle und Wendel hindurcherstreckt. In der Siebzone ist die Gehäusewandung der Schneckenfördereinrichtung als Sieb ausgebildet, während sie in der Preßzone geschlossen ist. Auch hier wird das Gehäuse am Ende der Schneckenfördereinrichtung im Bereich des Feststoffaustritts unter Pfropfenbildung weitgehend abgeschlossen, so daß auf diese Art und Weise ein Rückstau des Feststoffs in der Schneckenfördereinrichtung stattfindet. Mit diesem Rückstau wird auch gleichzeitig ein Druckaufbau erreicht.

Weiterhin sind Bandpressen zum Entwässern von Klärschlamm bekannt. Diese arbeiten vorteilhaft kontinuierlich. Auf den Bindern baut sich jedoch ein Filterkuchen aus dem Feststoffanteil auf, der das weitere Hindurchtreten von Filtratwasser erschwert. Mit solchen Bandpressen sind Feststoffgehalte von bis zu 25 % möglich.

Bekannte Kammerfilterpressen arbeiten zwar nicht kontinuierlich, ermöglichen jedoch höhere Feststoffgehalte bis zu etwa 36 %. Die Filterkuchen weisen vom Kern zu den äußeren Bereichen unterschiedliche Feuchtigkeit auf, wobei es innen am feuchtesten ist.

Aus der EP-A 017 809 ist eine Vorrichtung zur Ölgewinnung aus gereinigten Ölfrüchten und Ölsaaten bekannt. Die Vorrichtung ist eine Schneckenfördereinrichtung mit einer angetriebenen Förderschnecke aus Welle und Wendel und einem perforierten Mantel, der einen einzigen zylindrischen Bereich bildet. In diesem zylindrischen Bereich sind mehrere in Durchsatzrichtung der Schneckenfördereinrichtung aneinander anschlïeßende Preßbereiche vorgesehen. Die Preßbereiche weisen jeweils eingangsseitig einen konstanten Durchmesser der Welle und eine konstante Steigung der Wendel auf. In ihrem Endbereich ist jeweils ein auf die Welle aufgesetzter Konuskörper vorgesehen, wobei die Preßbereiche in Stufen wachsende Wellendurchmesser und wachsende Außendurchmesser der wendelfrei ausgebildeten Konuskörper aufweisen.

Der Erfindung liegt die Aufgabe zugrunde, eine kontinuierlich und automatisch arbeitende Vorrichtung der eingangs beschriebenen Art aufzuzeigen, mit der Feststoffgehalte von bis zu 25 %, bis zu 30 %, ja, sogar bis zu 35 % erreichbar sind, je nachdem, ob sich ein derartiger Feststoff zum Ausbringen in der Landwirtschaft, zum Deponieren oder zum Verbrennen eignen soll.

Erfindungsgemäß wird dies bei einer Vorrichtung gemäß dem Oberbegriff durch die kennzeichnenden Merkmale des Patentanspruchs 1 erreicht. Die Schneckenfördereinrichtung weist mehrere Preßbereiche auf, die in Durchsatzrichtung aneinander anschließend angeordnet sind, wobei die Preßbereiche in Stufen wachsende Wellendurchmesser und wachsende Außendurchmesser der wendelfrei ausgebildeten Konuskörper aufweisen. Die Ausbildung und Anordnung mehrerer aufeinander abgestimmter Preßbereiche nacheinander ist sinnvoller, als eine weitere Drucksteigerung einzubringen. So wird der Schlamm in den einzelnen Preßbereichen mehrmals hintereinander unter Druck gesetzt und zwischen den Bereichen relativ entspannt. Außerdem findet eine Rückvermischung des zu entwässernden Schlamms statt, wobei immer wieder neue Schlammpartien unmittelbar der Siebwandung benachbart entwässert werden können. Die Konuskörper sind wendelfrei ausgebildet. Sie können als gerade Kegel ausgebildet sein und mit ihrer Achse koaxial zu der Achse der Welle angeordnet sein. In einer anderen Ausführungsform sind die Konuskörper im wesentlichen als spiralig radial wachsende Körper ausgebildet und auf der Welle angeordnet, so daß sich radial über den Umfang eine Querschnittsverengung einstellt, die in einer radialen Stufe endet. Auch Kombinationen aus geradem Kegel mit radial spiraliger Ausbildung sind möglich. Ein solcher Konuskörper dient in jedem Fall der Aufbringung des Rückstaus und zum anderen der Durchmesserreduzierung. Der Konuskörper erfüllt damit keine Förderfunktion und ist auch deswegen wendelfrei ausgebildet. Die Siebwandung ist im ersten zylindrischen Bereich, im konischen Bereich und in den Preßbereichen nicht nur um 360° umlaufend vorgesehen, sondern diese Bereiche sind zugleich Bestandteil einer kommunizierenden Röhre mit entsprechendem Aufbau statischer Drücke. In den einzelnen Bereichen findet ein schonender Druckaufbau und Rückstau statt, wobei die durch das Flockungsmittel erzeugten Flocken nicht zerstört werden. Nicht nur im ersten zylindrischen Bereich, sondern auch in den Preßbereichen, kommen immer wieder neue Schlammpartien mit der Siebwandung in Kontakt. Es findet eine laufende Durchmischung bzw. Walkung des Schlamms in den einzelnen Bereichen statt. Am Ende jedes Preßbereichs ist eine Stufe gebildet, die einerseits der Rückvermischung und andererseits dem Druckabbau dient. Der Aufbau eines über längere Zeiten beizubehaltenden Fïlterkuchens an der Siebwandung wird vorteilhaft vermieden, weil immer wieder eine Umschïchtung und Durchmischung des Schlamms stattfindet. Der Auslaß der Schneckenfördereinrichtung wird nicht zugehalten, wie dies im Stand der Technik üblich ist. Mit der neuen Vorrichtung kann z. B. Faulschlamm mit einem Feststoffausgangsgehalt von 3 bis 7 % auf einen Feststoffgehalt bis zu 30 %, ja, sogar bis zu 35 %, entwässert werden. Bei Überschußschlamm mit einem Feststoffausgangsgehalt von 0,5 bis 1 % ergeben sich Feststoffgehalte in der Größenordnung von 10 bis 15 %. Durch die Einbeziehung der Siebwandung mit den Preßbereichen in eine kommunizierende Röhre arbeitet die Vorrichtung auf erhöhtem Druckniveau, welches sich aus der Summe der statischen Drücke und dem Druckaufbau infolge Rückstau und Volumenreduzierung ergibt. Die kommunizierende Röhre kann auf verschiedene Weise realisiert werden. Insbesondere ist es möglich, die Schneckenfördereinrichtung schrägstehend anzuordnen, womit gleichzeitig eine entsprechende Abwurfhöhe für den aus der Vorrichtung austretenden Schlamm erreicht wird. Durch diese schrägstehende Anordnung wird ein in Durchsatzrichtung in den einzelnen Bereichen jeweils abnehmender statischer Druckanteil zur Einwirkung gebracht. Es ist andererseits möglich, die Schneckenfördereinrichtung mit ihrer Welle waagerecht anzuordnen und beispielsweise das Ende der Vorrichtung in einem mehr oder weniger senkrecht geführten Rohr nach oben zu führen und in eine Schurre überzuleiten, so daß auf diese Weise die Abwurfhöhe erreicht wird. In beiden Fällen bildet das Ende der Vorrichtung den aufsteigenden Schenkel der kommunizierenden Röhre, während der andere Schenkel von einem Flockungsreaktor gebildet wird, der der Vorrichtung vorgeschaltet ist. Auch bei diesem Arbeiten auf erhöhtem Druckniveau findet nach jedem Konuskörper ein relativer Druckabbau statt, so daß auch hier immer eine neue Durchmischung, eine Umschichtung und ein Durchwalken des Schlamms vonstatten geht, bevor der Schlamm in einem neuen Bereich wieder einer relativen Druckerhöhung unterworfen wird, wodurch eine Entwässerung, Eindickung und damit letztlich eine Erhöhung des Feststoffgehalts stattfindet. Die Schneckenfördereinrichtung weist in ihren einzelnen, in Durchsatzrichtung hintereinander angeordneten Preßbereichen abnehmende Spaltweiten auf, die aufeinander abgestimmt sind. Mit zunehmender Anzahl der Preßbereiche kann in den nachfolgenden Preßbereichen auch ein jeweils höherer Druck angewendet werden, wenn die Gewähr dafür gegeben ist, daß der Schlamm beim Eintritt in jeden neuen Preßbereich wieder vermischt wird, so daß sichergestellt ist, daß an jeder Siebwandung wieder neue Schlammteile und Bereiche zur Anlage und damit zur Einwirkung gebracht werden. Die Schneckenfördereinrichtung weist in ihren einzelnen, in Durchsatzrichtung hintereinander angeordneten preßbereichen abnehmende Spaltweiten auf, wodurch sichergestellt ist, daß der Schlamm durch eine solche Stufung gehindert ist, durch die Siebwandung nach außen hindurchzutreten. Besonders vorteilhaft ist es, wenn die Spaltweite im zylindrischen Bereich etwa 1 - 0,5 mm, im konischen Bereich etwa 0,25 mm und in den sich anschließenden Preßbereichen weiter abnehmend - insbesondere zwischen 0,25 und 0,1 mm - gestaltet ist. Die Spaltweite nimmt in Durchsatzrichtung damit grundsätzlich ab. Eine übermäßige Druckerhöhung in den einzelnen Preßbereichen wird vermieden. Die Druckerhöhung ist vielmehr auf die jeweilige Stufe der Entwässerung im Sinne einer Volumenreduzierung abgestimmt. Es kann mit durchaus vergleichsweise niedrigen Drücken gearbeitet werden. Wichtig ist auch die Stufenbildung am Ende der Konuskörper. Hier findet gleichsam eine Entspannung des jeweils teïlentwässerten Schlamms statt, damit eine Umorientierung des Schlamms durchgeführt werden kann, worauf dann ein erneuter relativer Druckaufbau stattfindet.

Bei all diesen Ausführungsformen ist es möglich, den konischen Bereich mit teilweise geschlossener Wandung auszustatten, also in diesem konischen Bereich auf die Anordnung einer Siebwandung oder von Teilen der Siebwandung zu verzichten. Auf diese Art und Weise wird im konischen Bereich der sich ausbildende Rückstau vergrößert, was einer Verbesserung der Entwässerung im vorangeschalteten zylindrischen Bereich zugutekommt.

Zur Reinigung der Siebwandung kann eine Spüleinrichtung für Filtratwasser vorgesehen sein. Damit wird die Siebwandung immer wieder gesäubert und freigehalten, so daß sich kein Filterkuchen an der Siebwandung ab- und ansetzen kann. Die Siebwandung kann von einer geschlossenen Außenwandung umgeben sein, um das Filtratwasser jeweils aufzufangen und abzuführen. In Verbindung damit oder auch getrennt davon kann eine Heizvorrichtung zum Aufheizen des zu entwässernden Schlamms vorgesehen sein. Diese Heizvorrichtung ist zweckmäßig zwischen dem Flockungsreaktor und der Vorrichtung eingeschaltet. Sie kann auch am Anfang der Vorrichtung, z. B. als beheizbarer Boden, zu Beginn des zylindrischen Bereichs des Gehäuses der Vorrichtung vorgesehen sein. Auch eine Anordnung an anderer Stelle ist möglich. Durch die Aufheizung des Klärschlamms wird erstaunlicherweise die Entwässerung begünstigt.

Der Schneckenfördereinrichtung kann ein Flockungsreaktor für eine Voreindickung vorgeschaltet sein, in welchem das Flockungshilfsmittel hinzugefügt wird. Der Flockungsreaktor kann ein Feinsieb für eine Vorentwässerung des Schlamms aufweisen. Die Spaltweite des Feinsiebs beträgt etwa 0,5 mm. Hier findet kein Druckaufbau statt, sondern es wird ausschließlich unter Schwerkrafteinwirkung gearbeitet. Durch ein Rührwerk wird der Schlamm bewegt, so daß auch hier eine Rückvermischung stattfindet und immer neue Schlammpartien in Nachbarschaft zu der Wandung des Feinsiebs kommen.

Der Schneckenfördereinrichtung kann ein weiterer Flockungsreaktor vorgeschaltet sein, der zwischen dem ersten Flockungsreaktor und der Vorrichtung angeordnet und zur Nacheindickung des Schlamms mit einem Sieb vergleichsweise größerer Spaltweite ausgestattet ist. Auch bei dieser Nacheindickung wird über das Sieb wiederum eine beachtliche Menge Filtratwasser abgeführt.

Die Vorrichtung wird anhand bevorzugter Ausführungsbeispiele weiter erläutert und beschrieben. Es zeigen:
- Figur 1: eine schematische Darstellung einer Schlammentwässerungsanlage mit der neuen Vorrichtung,
- Figur 2: die Ausbildung der Siebwandung der neuen Vorrichtung,
- Figur 3: eine schematische Darstellung eines Teils der Vorrichtung mit drei Preßbereichen,
- Figur 4: die Volumenreduzierung der Vorrichtung in Durchsatzrichtung,
- Figur 5: ein Schlammbehandlungsschema,
- Figur 6: eine schematische Darstellung einer weiteren Ausführungsform der neuen Vorrichtung und
- Figur 7: die Ausbildung der Siebwandung der Vorrichtung nach Figur 6 und
- Figur 8: einen Schnitt gemäß der Linie VIII-VIII in Figur 3 mit abgewandeltem Konuskörper.

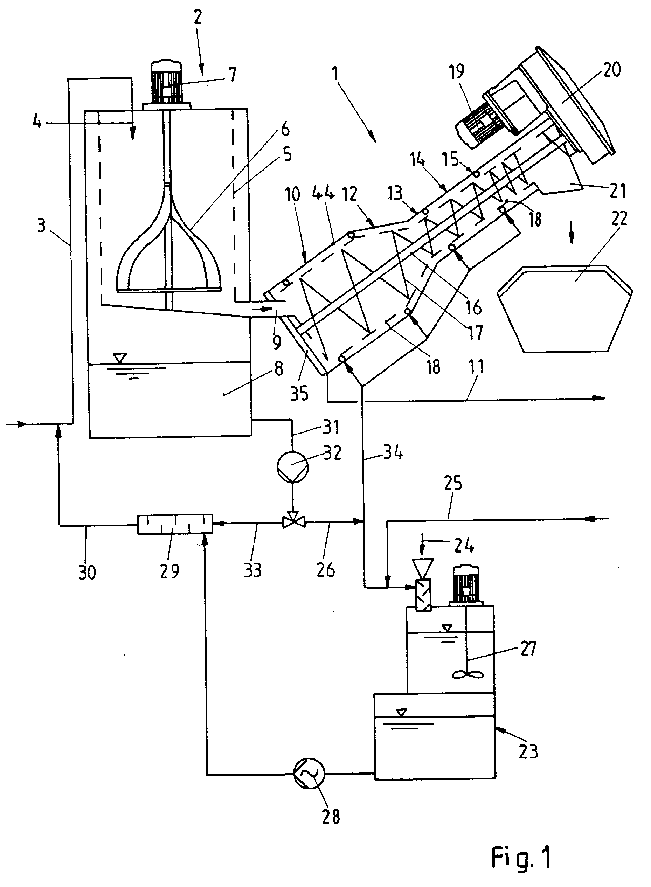

In Figur 1 ist die Vorrichtung 1 mit schrägstehend angeordneter Achse in stark schematisierter Weise als Bestandteil einer Schlammentwässerungsanlage dargestellt. Zunächst ist ein Flockungsreaktor 2 vorgesehen, in dem der Schlamm über eine Leitung 3 gemäß Pfeil 4 von oben eingegeben wird. In dem Flockungsreaktor ist ein Feinsieb 5 etwa zylinderförmiger Ausbildung angeordnet, in dessen Innern ein Rührwerk 6 vorgesehen ist, welches von einem Motor 7 angetrieben wird. Auf dem mit einem Flockungshilfsmittel versetzten Schlamm wirkt im Feinsieb 5 nur die Schwerkraft sowie die durch das Rührwerk 6 erbrachte Bewegung ein, so daß auch hier immer neue Schlammpartien mit der Wandung des Feinsiebs 5 in Kontakt gebracht werden. Es findet eine Vorentwässerung statt und es sammelt sich am Boden des Flockungsreaktors ein Filtrat 8. Über eine Leitung 9 gelangt der vorentwässerte Schlamm in die Vorrichtung 1, und zwar in einen ersten zylindrischen Bereich 10 relativ großen Durchmessers, in welchem eine Umwälzung des Schlamms stattfindet. Es ist hier noch kein zusätzlicher Druckaufbau vorhanden, sondern es wirkt hier nur die Schwerkraft und damit der statische Druck an jeder Stelle der kommunizierenden Röhre auf den Schlamm ein. Durch die intensive Umwälzung wird eine beachtliche Menge Filtrat 11 bereits im zylindrischen Bereich abgeführt, bevor sich ein konischer Teil 12 anschließt, der der Durchmesserreduzierung dient. An den konischen Teil 12 schließt sich wiederum ein zylindrischer Teil an, wobei hier mehrere Preßbereiche 13, 14, 15 vorgesehen sind. Es ist eine Schneckenfördereinrichtung im Innern der Vorrichtung 1 vorgesehen, die eine Welle 16 mit Wendel 17 aufweist, der die Siebwandung 18 in den einzelnen beschriebenen Bereichen zugeordnet ist. Die Siebwandung 18 ist von einer Außenwandung 44 umgeben. Die Welle 16 wird durch einen Motor 19 mit Untersetzungsgetriebe 20 angetrieben. Durch eine Verminderung der Drehzahl der Welle 16 kann die Verweildauer des Schlamms in der Vorrichtung erhöht werden. Über eine Schurre 21 gelangt der entwässerte Schlamm mit einem Feststoffgehalt von etwa 30 % in einen Behälter 22. Über eine Heizeinrichtung 35, z. B. in Form eines beheizbaren Bodens an der Vorrichtung 1, kann der zu behandelnde Schlamm bei seinem Eintritt in die Vorrichtung 1 beheizt werden. Eine solche Temperaturerhöhung wirkt sich auf die Entwässerung günstig aus. Die gesamte Vorrichtung 1 mit Welle 16 und Wendel 17 ist schrägstehend angeordnet, so daß der in der Vorrichtung behandelte Schlamm zugleich mit entsprechender Abwurfhöhe nach oben gefördert wird.

Es ist ein Löse- und Dosierbehälter 23 vorgesehen, in den das Flockungshilfsmittel 24 eingebracht wird und entweder in Betriebswasser aus der Leitung 25 oder in Filtratwasser aus einer Leitung 26 gelöst wird. Im Löse- und Dosierbehälter 23 ist ein Rührwerk 27 angebracht. Über eine Dosierpumpe 28, einen Mischer 29 und eine Leitung 30 gelangt das dosierte Flockungshilfsmittel 24 in die Leitung 3 und damit in den Flockungsreaktor 2. Das am Flockungsreaktor 2 anfallende Filtrat 8 kann über eine Leitung 31, in der eine Filtratpumpe 32 angeordnet ist, entweder in die Leitung 26 zum Löse- und Dosierbehälter 23 oder über eine Leitung 33 an den Mischer 29 abgegeben werden. Von der Leitung 26 aus besteht auch die Möglichkeit, das Filtrat 8 als Spülwasser in einer Leitung 34 der Vorrichtung 1 zuzuführen und damit die Siebwandung 18 zu säubern.

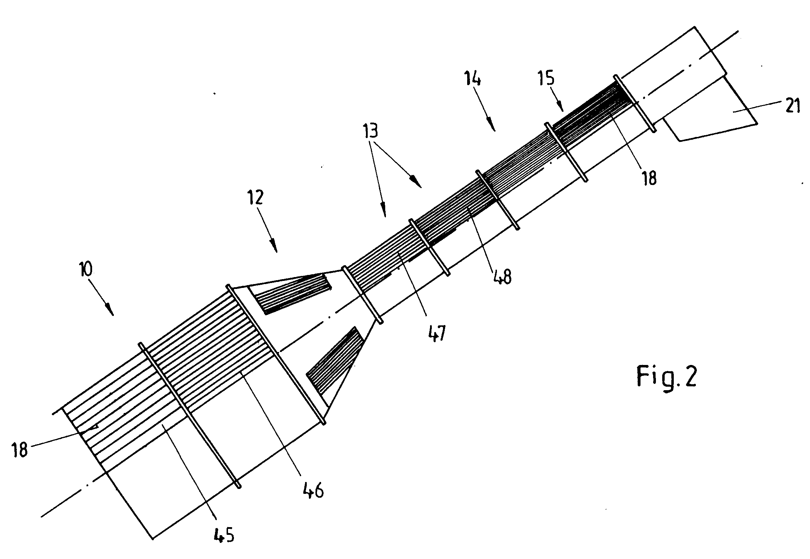

In Figur 2 ist die Siebwandung 18 der Vorrichtung 1 dargestellt. Der zylindrische Bereich 10, in welchem die Steigung der Wendel 17 konstant ist, ist in zwei Bereiche 45 und 46 unterteilt. Die Siebwandung 18 im Bereich 45 weist eine Spaltweite von 1 mm auf. Im Bereich 46 beträgt die Spaltweite 0,5 mm. Die Siebwandung 18 erstreckt sich über einen Umfangsbereich von 360°. Es schließt sich dann der konische Teil 12 an, bei dem in den Kegelstumpf drei über den Umfang verteilt angeordnete Bereiche von etwa 70° vorgesehen sind, die als Siebwandungen ausgebildet ist, während der restliche Teil geschlossen ist. Hier findet eine wesentliche Durchmesserreduzierung statt. Die Spaltweite beträgt 0,25 mm. Es folgt sodann der erste Preßbereich 13, der doppelt so lang wie die nachfolgenden Preßbereiche 14 und 15 ausgebildet ist. Der Preßbereich 13 zerfällt wiederum in zwei Bereiche 47 und 48. Die Spaltweite im Bereich 47 beträgt 0,25 mm, während im Bereich 48 eine Spaltweite von 0,2 mm vorgesehen ist. Es versteht sich, daß hier die Siebwandung 18 auf dem gesamten Umfang der zylindrischen Wandung vorgesehen ist. Im Preßbereich 14 beträgt die Spaltweite 0,15 mm. Im Preßbereich 15 ist eine Spaltweite von 0,1 mm vorgesehen. Man erkennt, daß in Durchsatzrichtung abnehmende Spaltweiten gestuft angeordnet sind.

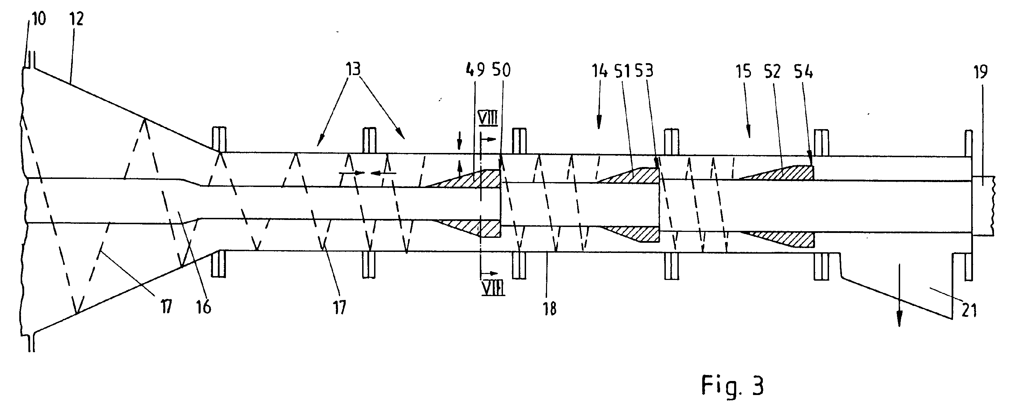

Figur 3 verdeutlicht den inneren Aufbau der Vorrichtung 1 bzw. der Schneckenfördereinrichtung. Der zylindrische Bereich 10 ist nur teilweise dargestellt. Dort besitzt die Wendel 17 konstante Steigung. Im Bereich des anschließenden konischen Teils 12 wird der Durchmesser reduziert. Auch der Durchmesser der Welle 16 wird am Ende des konischen Bereichs 12 etwas geringer.

Im ersten Preßbereich 13 besitzt die Welle einen ersten Durchmesser und die Wendel 17 weist abnehmende Steigung auf, so daß bereits vor einem Konuskörper 49 eine Verdichtungswirkung eintritt, durch den der zu entwässernde Schlamm unter Druck gerät. Auch der Konuskörper 49 wirkt im Sinn einer Rückstaubildung aufgrund eines Druckaufbaus. Die Wendel 17 ist im Bereich des Konuskörpers 49 nicht vorgesehen. Der Außendurchmesser des Konuskörpers 49 ist auf die gewünschte Verdichtungswirkung in diesem ersten Preßbereich 13 abgestimmt. Am Eingang zu dem zweiten Preßbereich 14 bildet der Konuskörper 49 eine Stufe 50, die der Entspannung bzw. dem Druckabbau dient, so daß der im ersten Preßbereich 13 teilentwässerte Klärschlamm entspannt in den zweiten Preßbereich 14 gelangt. Durch die Stufe 50 findet auch eine Durchmischung statt, so daß nunmehr andere Schlammpartien nach außen mit der Siebwandung 18 in direkte Berührung kommen, während solche Schlammbereiche, die vorher im Preßbereich 13 relativ weit außen gelagert waren, mehr nach innen verschichtet werden. Auch im zweiten Preßbereich 14 weist die Wendel 17 abnehmende Steigung auf. Die Welle 16 besitzt hier bereits einen vergleichsweise größeren Durchmesser. Auch ein den Preßbereich 14 abschließender Konuskörper 51 weist einen größeren Außendurchmesser als der Konuskörper 49 des ersten Preßbereichs 13 auf. Die Abstimmung ist zweckmäßig so getroffen, daß sie entsprechend der Volumenreduzierung durch das in dem ersten Preßbereich 13 abgeführte Filtratwasser abgestimmt ist. Die Druckstufen in den einzelnen Preßbereichen 13, 14, 15 können durchaus gleich oder etwa gleich groß sein. Eine Drucksteigerung in Durchlaufrichtung ist meist nicht förderlich.

Der dritte Preßbereich 15 ist wieder entsprechend aufgebaut. Die Welle 16 weist hier einen noch größeren Durchmesser auf. Auch die Wendel 17 besitzt wiederum abnehmende Steigung und ein Konuskörper 52 weist einen größeren Außendurchmesser als der Konuskörper 51 auf. Auch an den Konuskörpern 51 und 52 sind Stufen 53 und 54 vorgesehen bzw. gebildet, die die gleiche Funktion haben wie die Stufe 50. Jeder Preßbereich 13, 14, 15 wird damit mit einer Entspannung, also einem relativen Druckabbau und einer Durchmischung des Klärschlamms, abgeschlossen. Das Ziel dieser Preßbereiche 13, 14, 15, deren Anzahl variiert werden kann, ist es, den Schlamm gleichzeitig aus dem Zustand mit reduziertem Druck immer wieder erneut einer Entwässerungstufe zuzuführen, eine relative Druckerhöhung zu erreichen und wiederum einen weiteren Anteil von Filtratwasser abziehen zu können. Über die Schurre 21 gelangt der Schlamm mit einem Feststoffgehalt von etwa
30 % aus der Vorrichtung. Er kann so deponiert, verbrannt oder kompostiert werden.

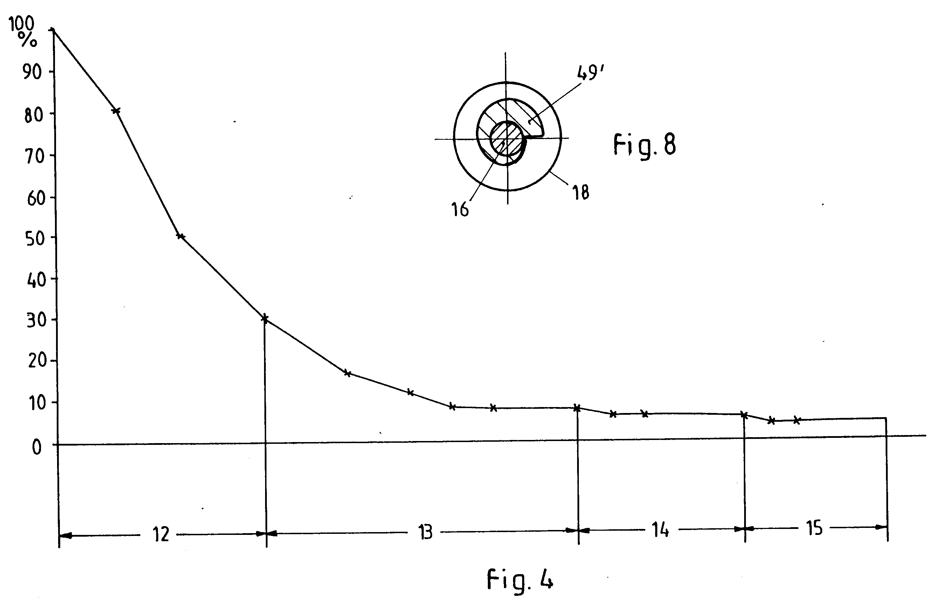

Figur 4 zeigt die Volumenreduzierung innerhalb der Vorrichtung 1, beginnend am Übergang von dem zylindrischen Teil 10 zu dem konischen Teil 12, also dort, wo die Durchtrittsfläche erstmals voll ausgefüllt wird. Man erkennt, daß im konischen Teil 12 bereits eine wesentliche Volumenreduzierung von etwa 1/3 stattfindet. In den anschließenden Preßbereichen 13, 14, 15 ist die Volumenreduzierung nicht mehr so gravierend, was auch verständlich ist, da der Feststoffgehalt ansteigt und es immer schwieriger wird, weiteres Filtrat aus dem Schlamm herauszuholen.

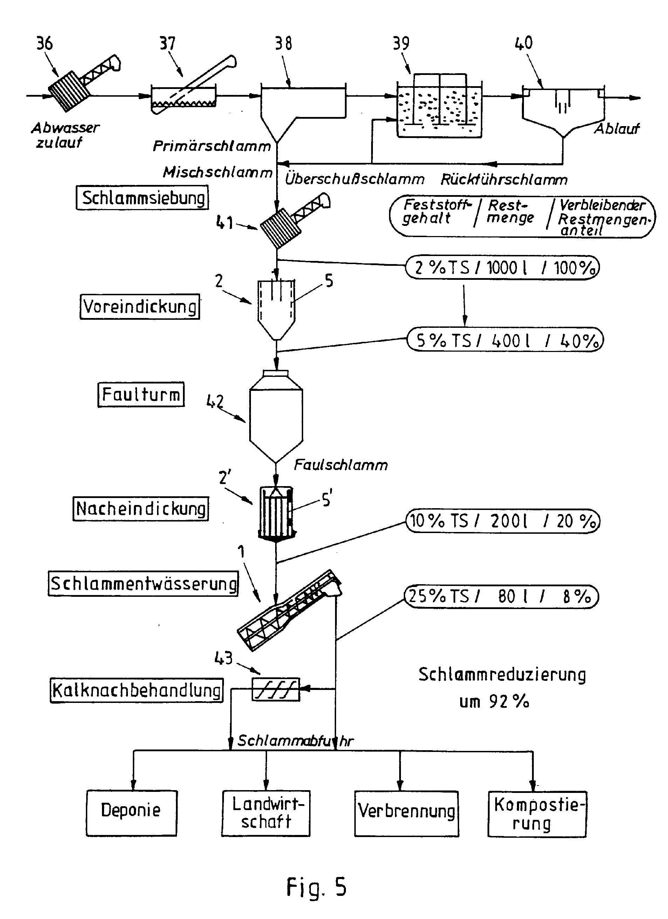

Figur 5 zeigt ein Schlammbehandlungsschema, bei dem eine Mehrzahl von verschiedenen Aggregaten zur Behandlung des Schlamms hintereinander angeordnet sind. Die Schlammbehandlung kann in dieser Reihenfolge stattfinden. Selbstverständlich ist es auch möglich, spezielle Schlammarten nur durch einen Teil der Aggregate hindurchzuführen. Im allgemeinen jedoch durchläuft der aufzubereitende Schlamm zunächst einen Rechen 36 und einen Sandfang 37, so daß hier Rechengut und Sand aus dem Abwasser herausgeholt werden. Dieses gelangt anschließend in ein Vorklärbecken 38, an dessen tiefster Stelle Primärschlamm abgezogen werden kann. Aus dem Vorklärbecken kann das Abwasser/Schlammgemisch jedoch auch noch weiter in ein Belebungsbecken 39 und ein Nachklärbecken 40 überführt werden, wobei auf diese Art und Weise Rückführschlamm und Überschußschlamm entstehen.

Die verschiedenen Schlammarten können entweder einzeln oder auch als Mischschlamm zunächst gesiebt werden. Diese Schlammsiebung findet in einer Siebschnecke 41 statt. Die Schlammsiebung ist sinnvoll, weil ein großer Teil des Wartungsaufwands für nachgeschaltete Aggregate wie Flockungsreaktoren 2, 2′, Faultürme 42, zugehörige Pumpen und Schlammleitungen dadurch bedingt ist, daß Grobstoffe wie Plastilfolien, Faserstoffe usw. Pumpen, Schieber, Wärmetauscher und Rohrleitungen verstopfen. Der Einsatz einer Siebschnecke oder auch ähnlicher Siebanlagen für die Schlammsiebung vermeidet diese Probleme und erleichtert auch die Handhabung des Schlamms bei der weiteren Schlammbehandlung, z. B. im Faulturm (bessere Schwimmdecke) und schließlich bei der Entsorgung, ob in der Verbrennung, Kompostierung oder bei der Abgabe in die Landwirtschaft.

Am Ausgang der Siebschnecke liegt ein Schlamm mit einem Feststoffgehalt von 2 % vor. Um die jeweiligen Restmengen in Litern vergleichbar anzugeben und den verbleibenden Restmengenanteil in % darzustellen, seien hier eine zu behandelnde Menge von 1.000 l angenommen. Der Schlamm gelangt nach der Schlammsiebung in einen Flockungsreaktor 2, in welchem eine Voreindickung stattfindet. Dabei wird nicht nur das Flockungsmittel hinzugegeben, sondern auch über ein Feinsieb 5 entwässert. Primärschlämme und vor allem Überschußschlämme mit sehr niedrigen Feststoffgehalten müssen kontinuierlich eingedickt werden, damit die Auslegung der Pumpen, der Wärmetauscher und vor allem die Dimensionierung der Faultürme und Umwälzpumpen in wirtschaftlichen Grenzen gehalten werden kann. Am Ausgang des Flockungsreaktors 2 liegt ein Schlamm mit 5 % Feststoffgehalt vor. Da bereits 60 % des Wassers entfernt wurde, beträgt die zu behandelnde Restmenge 400 l oder 40 % des Ausgangsschlamms.

Der sich anschließende Faulturm 42 wird somit auch nur mit dieser Restmenge belastet. In ihm findet die Schlammfaulung statt. Diese anaerobe Schlammstabilisierung und Faulung ist das am häufigsten angewendete Stabilisierungsverfahren. Mit ihm ist der Vorteil der Energiegewinnung von Gas verbunden. Der Betrieb und Aufbau eines Faulturms 42 ist an sich bekannt.

An den Faulturm 42 kann sich ein weiterer Flockungsreaktor 2′ anschließen, der an sich ähnlich ausgebildet ist, wie der Flockungsreaktor 2. Das in ihm eingesetzte Sieb 5′ besitzt lediglich eine größere Spaltweite als diejenige des Siebs 5 des Flockungsreaktors 2. Hier findet die Nacheindickung statt. Durch den Abbau von organischen Bestandteilen des Schlamms bei der Schlammstabilisierung (Faulung) wird der Schlamm wieder wässriger und eine Nacheindickung des Schlamms mit weiterer Entwässerung ist nötig. Am Ausgang des Flockungsreaktors 2′ liegt ein Schlamm mit 10 % Feststoffgehalt vor. Die zu behandelnde Menge hat sich auf 20 % reduziert. Somit wird die sich anschließende Vorrichtung 1 auch nur mit dieser geringen Restmenge belastet. Es findet hier in der Vorrichtung 1 eine weitere Entwässerung statt. Der Feststoffgehalt am Ausgang der Vorrichtung 1 beträgt etwa 25 % und kann je nach Schlammart schwanken. bis 30 % Feststoffgehalt ist möglich. Die verbleibende Restmenge beträgt 8 % der eingesetzten Menge oder 80 l. Diese hohe Entwässerung wirkt sich vorteilhaft aus, und zwar sowohl auf eventuell anfallende Transportkosten als auch auf die Kosten für die weitere Schlammentsorgung auf der Deponie, in der Landwirtschaft, durch Verbrennung oder durch Kompostierung. Mit Hilfe der kontinuierlich arbeitenden Vorrichtung 1 und ggf. der weiteren genannten, vorgeschalteten Aggregate kann im Vergleich zu den anderen bekannten Schlammaufbereitungsverfahren viel Fläche und Zeit gespart werden. Der am Ausgang der Vorrichtung 1 anfallende Schlamm kann auch zunächst in einem Mischer 43 einer Kalknachbehandlung unterzogen werden. Dies hat den Vorteil, daß der Schlamm durch das Einmischen von Brandkalk hygienisiert wird und anschließend sofort in die Landwirtschaft ausgebracht werden kann. Zum anderen wird der Feststoffgehalt hierdurch auf ca. 35 bis 40 % erhöht und somit eine ausreichende Standfestigkeit für die Ablagerung in einer Deponie erreicht.

Bei der in den Figuren 1 bis 3 dargestellten Vorrichtung 1 ist die Schneckenfördereinrichtung schrägstehend angeordnet. In Verbindung mit dem Flockungsreaktor 2 ergibt sich eine kommunizierende Röhre, so daß das Abwasser/Schlammgemisch unter zusätzlicher Einwirkung des entsprechenden statischen Drucks behandelt wird. Infolge der schrägstehenden Anordnung der Vorrichtung 1 ist der statische Druck in den einzelnen Bereichen unterschiedlich. Im ersten zylindrischen Bereich 10 der Vorrichtung herrscht insoweit der größte statische Druck. Der Innenraum dieses Bereichs 10 ist voll ausgefüllt, ebenso wie die übrigen Bereiche. In Bearbeitungsrichtung des Schlamms beim Durchlauf durch die Vorrichtung 1 erniedrigt sich der statische Druckanteil von Stufe zu Stufe, da der Schlamm jeweils auf ein höheres Niveau gehoben wird. Diesem Anteil des statischen Drucks ist der Druckanteil überlagert, der sich durch die Ausbildung der nachfolgenden Bereiche ergibt. Der sich anschließende konische Teil 12, der entweder mit siebartig ausgebildeten Bereichen versehen sein kann oder aber auch gänzlich ohne jede Durchtrittsfläche geschlossen ausgebildet sein kann, erbringt nicht nur eine Durchmesserreduzierung in Durchsatzrichtung, sondern bewirkt auch einen Rückstau in den vorangehenden zylindrischen Bereich 10 hinein, der sich insoweit besser auswirken kann. In den nachfolgenden Preßbereichen 13, 14, 15 findet nach wie vor durch die entsprechenden Konuskörper 49, 51, 52 eine relative Druckerniedrigung statt, wobei insgesamt, also unter Mitberücksichtigung des statischen Druckanteils trotzdem am Ende jeder Stufe 50, 53, 54 noch ein, wenn auch erniedrigter, Überdruck vorliegen kann. Wichtig ist, daß an jeder Stufe 50, 53, 54 eine relative Druckerniedrigung stattfindet, so daß sich der Schlamm umschichten, durchmischen und durchwalken kann, so daß einerseits eine Vergleichmäßigung des Wassergehalts über den Querschnitt stattfindet und andererseits immer neue Schlammpartien nach außen gegen die Siebwandung 18 zur Anlage kommen und jeweils in den einzelnen Preßbereichen 13, 14, 15 immer wieder ein erneuter Preß- bzw. Auswringvorgang stattfindet.

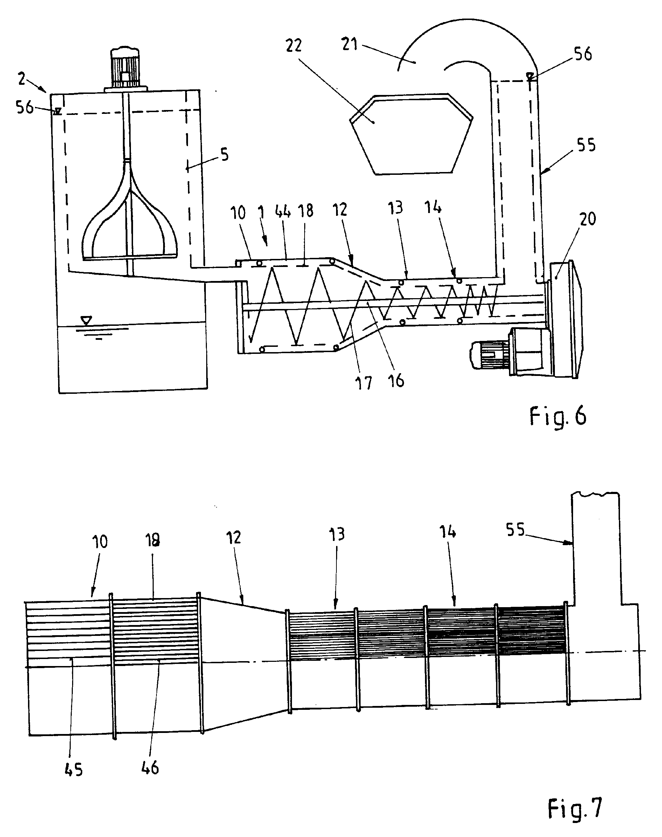

Figur 6 zeigt eine Anordnungsmöglichkeit der Vorrichtung 1 mit dem vorgeschalteten Flockungsreaktor 2, wobei die Achse der Vorrichtung 1 waagerecht angeordnet ist. Hierbei ist die Siebwandung 18 auch im Bereich des ersten zylindrischen Bereichs 10 um 360° umlaufend ausgebildet, so daß sich auch hier der Staudruck auswirken kann. Am Ende der Vorrichtung 1 ist die Siebwandung 18 wie auch die Außenwandung 44 in ein Steigrohr 55 hinein verlängert, an deren oberem Ende die Schurre 21 zum Abwurf des entwässerten Schlamms in den Behälter 22 vorgesehen ist. Die Vorrichtung 1 bildet in Verbindung mit dem Flockungsreaktor 2 und dem Steigrohr 55 eine kommunizierende Röhre, so daß sich ein Füllstandsspiegel 56 mit entsprechendem statischen Druck in der Vorrichtung 1 auswirken kann. Infolge der waagerecht liegenden Anordnung der Achse der Vorrichtung 1 ist der statische Druckanteil in den einzelnen Bereichen 10, 12, 13, 14 gleich groß. Man erkennt, daß durch die Variation der Schräglage in Förderrichtung nach oben oder nach unten ein abnehmender bzw. ein steigender Anteil des statischen Drucks in Durchsatzrichtung realisiert werden kann. Auch hierbei ist die Spaltweite in den einzelnen Bereichen 10, 13, 14 gestuft ausgebildet und beispielsweise ähnlich wie dies anhand der Ausführungsform der Figuren 1 bis 3 beschrieben wurde. Der statische Druck wirkt sich jedoch nicht nur in der Vorrichtung 1, sondern auch im Flockungsreaktor 2 aus, so daß am Ausgang des Flockungsreaktors 2 am Übergang zur Vorrichtung 1 ein Schlamm mit 10 bis 12 % Feststoffgehalt vorliegt, wenn eine Vorrichtung 1 gemäß den Figuren 6 und 7 mit waagerechter Achse entsprechend dem Schema der Figur 5 eingesetzt wird. Die zu behandelnde Menge des Schlamms beim Eintritt in die Vorrichtung 1 nach dem Flockungsreaktor 2′ hat sich auf ca. 20 % reduziert. Am Ausgang der Vorrichtung 1 sind Feststoffgehalte bis 35 % möglich. Die verbleibende Restmenge beträgt 7 % der eingesetzten Menge oder 70 l. Es ist sogar möglich, den Feststoffgehalt in eine Größenordnung von ca. 40 bis 45 % zu erhöhen, was für eine Verbrennung des Schlamms sehr günstig ist. Andererseits ergibt sich eine erhöhte Standfestigkeit des Schlamms bei Ausbringung in einer Deponie. Die Welle 16 und/oder die Wendel 17 können nicht dargestellte Schlitze, Durchbrechungen o. dgl. aufweisen, die der weiteren Entwässerung bzw. Vermischung des Schlamms dienen.

Figur 7 verdeutlicht noch einmal die Ausbildung der Siebwandung 18 in den einzelnen Bereichen. Der erste zylindrische Bereich 10 ist in die beiden Bereiche 45 und 46 unterteilt. Die Siebwandung 18 ist auch hier um 360° umlaufend ausgebildet. Die freie Durchtrittsfläche, also die Spalte oder die Löcher in der Siebwandung 18 in den Bereichen 45 und 46, ist unterschiedlich, und zwar abnehmend, gestaltet. Der konische Bereich 12 ist völlig geschlossen ausgebildet, besitzt also keine Durchtrittsfläche im Bereich seiner Siebwandung 18. Es schließen sich die beiden Preßbereiche 13 und 14 an, in denen die Spalte oder Löcher der zugehörigen Bereiche der Siebwandung 18 weiter abnehmende Größe aufweisen. Wie durch ein Vergleich der Figuren 2 und 7 auffällt, ist auch der Winkel des konischen Teils 12 anders gewählt, um in den nachfolgenden Preßbereichen 13 und 14 (Figur 7) eine größere Fläche ausnutzen zu können. Damit wird durch den konischen Teil 12 zwar der Rückstau in den zylindrischen Bereich 10 hinein etwas vermindert. Andererseits wirkt der statische Druckanteil dieser Tendenz entgegen.

Figur 8 zeigt einen Schnitt gemäß der Linie VIII-VIII in Figur 3, und zwar durch einen etwas abgewandelt ausgebildeten Konuskörper 49′. Der Konuskörper 49′ ist spiralig mit wachsendem Durchmesser ausgebildet und auf die Welle 16 aufgestzt, mit der er drehfest verbunden ist. Auch hierdurch tritt eine Querschnittsverengung auf, und zwar in radialer Richtung über den Umfang, wenn die Welle 16 umlaufend angetrieben wird. Die spiralige Ausbildung des Konuskörpers 49′ ist hier auf 360° bezogen und endet auch hier in einer Stufe, einer relativen Druckentspannung und Vermischung bzw. Umschichtung des Klärschlamms dient. Diese radiale Querschnittsverengung kann mit der in Figur 3 dargestellten axialen Querschnittsverengung auch kombiniert angewendet werden. Auch die anderen Konuskörper 51 und 52 der verschiedenen Preßbereiche können dann entsprechend angepaßt ausgebildet werden.

### Bezugszeichenliste:

1 = Vorrichtung
2 = Flockungsreaktor
3 = Leitung
4 = Pfeil
5 = Feinsieb
6 = Rührwerk
7 = Motor
8 = Filtrat
9 = Leitung
10 = zylindrischer Bereich
11 = Filtrat
12 = konischer Teil
13 = Preßbereich
14 = Preßbereich
15 = Preßbereich
16 = Welle
17 = Wendel
18 = Siebwandung
19 = Motor
20 = Untersetzungsgetriebe
21 = Schurre
22 = Behälter
23 = Löse- und Dosierbehälter
24 = Flockungshilfsmittel
25 = Leitung
26 = Leitung
27 = Rührwerk
28 = Dosierpumpe
29 = Mischer
30 = Leitung
31 = Leitung
32 = Filtratpumpe
33 = Leitung
34 = Leitung
35 = Heizvorrichtung
36 = Rechen
37 = Sandfang
38 = Vorklärbecken
39 = Belebungsbecken
40 = Nachklärbecken
41 = Siebschnecke
42 = Faulturm
43 = Mischer
44 = Außenwandung
45 = Bereich
46 = Bereich
47 = Bereich
48 = Bereich
49 = Konuskörper
50 = Stufe
51 = Konuskörper
52 = Konuskörper
53 = Stufe
54 = Stufe
55 = Steigrohr
56 = Füllstandsspiegel

## Patentansprüche

1. Kontinuierlich und automatisch arbeitende Vorrichtung (1) zum Entwässern eines mit einem Flockungshilfsmittel versetzten Schlamms, insbesondere Klärschlamms, mit einer Schneckenfördereinrichtung mit einer angetriebenen Förderschnecke aus Welle (16) und Wendel (17) und einer Siebwandung (18), wobei die Schneckenfördereinrichtung einen ersten zylindrischen Bereich (10) mit großem Durchmesser und großer Spaltweite aufweist, an den sich zwecks Volumenreduzierung in Durchsatzrichtung des Schlamms ein konischer Bereich (12) und ein zweiter zylindrischer Bereich mit kleinem Durchmesser anschließt, und wobei die Siebwandung (18) im ersten zylindrischen Bereich (10), im konischen Bereich (12) und im zweiten zylindrischen Bereich um 360° umlaufend vorgesehen ist, dadurch gekennzeichnet, daß im Anschluß an den konischen Bereich (12) in dem zweiten zylindrischen Bereich der Schneckenfördereinrichtung mehrere in Durchsatzrichtung aneinander anschließende Preßbereiche (13, 14, 15) vorgesehen sind, die jeweils eingangsseitig bei konstantem Durchmesser der Welle (16) eine abnehmende Steigung der Förderwendel (17) aufweisen und in ihrem Endbereich einen auf die Welle (16 ) aufgesetzten Konuskörper (49) tragen, wobei die Preßbereiche (13, 14, 15) in Stufen wachsende Wellendurchmesser und wachsende Außendurchmesser der wendelfrei ausgebildeten Konuskörper (49, 51, 52) aufweisen, daß die Siebwandung (18) in den einzelnen in Durchsatzrichtung hintereinander angeordneten Preßbereichen (13, 14, 15) abnehmende Spaltweiten aufweist, wobei insbesondere die Spaltweite im zylindrischen Bereich (10) etwa 1 - 0,5 mm, im konischen Bereich (12) etwa 0,25 mm und in den sich anschließenden Preßbereichen (13, 14, 15) weiter abnehmend - zwischen 0,25 und 0,1 mm - gestaltet ist, und daß die Siebwandung (18) Bestandteil einer kommunizierenden Röhre mit entsprechendem Aufbau statischer Drücke ist.

2. Vorrichtung nach Anspruch 1, dadurch gekennzeichnet, daß die Schneckenfördereinrichtung schrägstehend angeordnet ist.

3. Vorrichtung nach Anspruch 1, dadurch gekennzeichnet, daß zur Reinigung der Siebwandung (18) eine Spüleinrichtung mit Filtratwasser (8) vorgesehen ist, daß die Siebwandung (18) von einer geschlossenen Außenwandung (44) umgeben ist und, daß eine Heizvorrichtung (35) zum Aufheizen des zu entwässernden Schlamms vorgesehen ist.

4. Vorrichtung nach Anspruch 1, dadurch gekennzeichnet, daß der Schneckenfördereinrichtung ein Flockungsreaktor (2) für eine Voreindickung vorgeschaltet ist, der ein Feinsieb (5) für eine Vorentwässerung des Schlamms aufweist.

5. Vorrichtung nach Anspruch 4, dadurch gekennzeichnet, daß der Schneckenfördereinrichtung ein weiterer Flockungsreaktor (2′) vorgeschaltet ist, der zwischen dem ersten Flockungsreaktor (2) und der Vorrichtung (1) angeordnet und zur Nacheindickung des Schlamms mit einem Sieb vergleichsweise größerer Spaltweite ausgestattet ist.

## Claims

1. Continuously and automatically functioning apparatus (1) for dewatering a sludge, in particular a sewage sludge, with a flocculating aid added, having a feed-screw device with a driven teed screw comprising a shaft (16) and a helix (17) and a sieving wall (18), the feed-screw device having a first cylindrical region (10) with a large diameter and a large gap width, adjoining which, for the purpose of reducing volume in the throughput direction of the sludge, is a conical region (12) and a second cylindrical region with a small diameter, and the sieving wall (18) being provided circumferentially through 360° in the first cylindrical region (10), in the conical region (12) and in the second cylindrical region, characterised in that there are provided, downstream of the conical region (12) in the second cylindrical region of the feed-screw device, a plurality of pressing regions (13, 14, 15) which adjoin one another in the throughput direction and which each have at the input side a decreasing pitch of the feed helix (17), the diameter of the shaft (16) being constant, and support a conical body (49) mounted on the shaft (16) in its end region, the shaft diameters and the outside diameters of the conical bodies (49, 51, 52), which are of helix-free construction, increasing in steps in the pressing regions (13, 14, 15), in that the sieving wall (18) has decreasing gap widths in the individual pressing regions (13, 14, 15) disposed one behind the other in the throughput direction, in particular the gap width in the cylindrical region (10) being designed as about 1 - 0.5 mm, as about 0.25 mm in the conical region (12) and as decreasing further, between 0.25 and 0.1 mm, in the subsequent pressing regions (13, 14, 15) and in that the sieving wall (18) is a component of a communicating tube with a suitable build-up of static pressures.

2. Apparatus according to Claim 1, characterised in that the feed-screw device is disposed in an inclined position.

3. Apparatus according to Claim 1, characterised in that a rinsing device employing filtrate water (8) is provided for cleaning the sieving wall (18), in that the sieving wall (18) is surrounded by a continuous outside wall (44), and in that a heating apparatus (35) is provided for heating the sludge to be dewatered.

4. Apparatus according to Claim 1, characterised in that, for the purpose of pre-thickening, there is located upstream of the feed-screw device a flocculation reactor (2) which has a fine sieve (5) for the purpose of predewatering the sludge.

5. Apparatus according to Claim 4, characterised in that there is located upstream of the feed-screw device a further flocculation reactor (2′) which is disposed between the first flocculation reactor (2) and the apparatus (1) and which is equipped with a sieve having a comparatively larger gap width for post-thickening the sludge.

## Revendications

1. Dispositif (1) travaillant en continu et automatiquement pour déshydrater une boue traitée avec un agent de floculation, en particulier de la boue de clarification, avec un transporteur à vis avec une vis transporteuse se composant d'un arbre (16) et d'une hélice (17) et avec une paroi filtrante (18), le transporteur à vis présentant une première zone cylindrique (10) de grand diamètre et à grande largeur de fentes, à laquelle font suite, dans le but de réduire le volume dans le sens de passage de la boue, une zone conique (12) et une deuxième zone cylindrique de plus petit diamètre, et dans lequel la paroi filtrante (18) est prévue pour s'étendre sur 360° dans la première zone cylindrique (10), dans la zone conique (12) et dans la deuxième zone cylindrique,
**caractérisé** en ce que, à la suite de la zone conique (12), sont prévues dans la deuxième zone cylindrique plusieurs zones de pressage (13, 14, 15) se raccordant les unes aux autres dans le sens de transport, gui présentent chacune du côté de l'entrée, avec un diamètre constant de l'arbre (16), un pas décroissant de l'hélice transporteuse (17) et portent dans leur région terminale un corps conique (49) calé sur l'arbre (16), les zones de pressage (13, 14, 15) présentant des diamètres croissants de l'arbre et des diamètres extérieurs croissants des corps coniques (49, 51, 52) ne portant pas d'hélice, en ce que la paroi filtrante (18) présente, dans les diverses zones de pressage (13, 14, 15) disposées à la suite l'une de l'autre dans le sens de transport, des largeurs de fentes decroissantes, la largeur des fentes étant, en particulier, d'environ 1 à 0,5 mm dans la zone cylindrique (10), d'environ 0,25 mm dans la zone conique (12), et comprise, en continuant à diminuer, entre 0,25 et 0,1 mm dans les zones de pressage (13, 14, 15) se raccordant l'une à l'autre, et en ce que la paroi filtrante (18) fait partie d'une tubulure communiquante avec formation correspondante d'une pression statique.

2. Dispositif selon la revendication 1, caractérisé en ce que le transporteur à vis est dispose en position inclinée.

3. Dispositif selon la revendication 1, caractérisé en ce que, pour nettoyer la paroi filtrante (18), il est prévu un dispositif de rinçage avec de l'eau de filtration (8), en ce que la paroi filtrante (18) est entourée d'une paroi extérieure fermée (44), et en ce qu'il est prévu un dispositif de chauffage (35) pour chauffer la boue à déshydrater.

4. Dispositif selon la revendication 1, caractérisé en ce qu'en amont du transporteur à vis est disposé un réacteur de floculation (2) pour un épaississement préliminaire, qui présente un tamis fin (5) pour une déshydratation préliminaire de la boue.

5. Dispositif selon la revendication 4, caractérisé en ce qu'en amont du transporteur à vis est disposé un réacteur de floculation (2′) supplémentaire qui est disposé entre le premier réacteur de floculation (2) et le dispositif (1), et qui est équipé, pour l'épaississement complémentaire de la boue, d'un tamis ayant une largeur de fentes comparativement plus grande.
